**Europäisches Patentamt**

(19) **European Patent Office**

**Office européen des brevets**

(11) Numéro de publication: **0 113 307**
**B1**

(12) **FASCICULE DE BREVET EUROPÉEN**

(45) Date de publication du fascicule du brevet:
24.09.86

(21) Numéro de dépôt: **83460007.4**

(22) Date de dépôt: **22.12.83**

(51) Int. Cl.⁴: **H 04 J 3/06**

(54) Circuit d'alignement de blocs d'informations numériques de longueur fixe.

(30) Priorité: **29.12.82 FR 8222226**

(43) Date de publication de la demande:
**11.07.84 Bulletin 84/28**

(45) Mention de la délivrance du brevet:
**24.09.86 Bulletin 86/39**

(84) Etats contractants désignés:
**BE CH DE FR GB IT LI NL SE**

(56) Documents cité:
**EP-A-0 041 429**
**FR-A-2 300 470**
**FR-A-2 305 073**
**US-A-3 134 962**

(73) Titulaire: **Servel, Michel, Le Rhu en Servel, F-22300 Lannion (FR)**
Titulaire: **Thomas, Alain, Ar Santé L 322, F-22300 Lannion (FR)**

(72) Inventeur: **Servel, Michel, Le Rhu en Servel, F-22300 Lannion (FR)**
Inventeur: **Thomas, Alain, Ar Santé L 322, F-22300 Lannion (FR)**

(74) Mandataire: **Le Guen, Louis François, Cabinet Louis Le Guen 1, avenue Edouard VII B.P. 91, F-35802 Dinard Cédex (FR)**

## Description

La présente invention concerne un circuit d'alignement de blocs d'informations numériques de longueur fixe quelconque, appliqués au circuit sans relation de phase connue, dans des intervalles de temps de longueur égale à celle des blocs et à récurrence cyclique imposée. A l'entrée du circuit d'alignement, la détection des limites de blocs est effectuée à l'aide d'un signal de cadrage indicatif de début de bloc. L'alignement effectué par le circuit d'alignement consiste à en lire les blocs en fonction d'un signal de cadrage local dont la période est égale à la durée de lecture d'un bloc, les signaux de cadrage locaux constituant des créneaux de temps locaux dans lesquels s'insèrent les informations numériques lues.

Le circuit d'alignement peut, par exemple, servir à traiter un multiplex de paquets avec une horloge de réception qui soit plésiochrone de l'horloge d'émission de multiplex. Dans un exemple particulier d'application du circuit d'alignement suivant l'invention, il est destiné à traiter un multiplex de paquets occupant des intervalles périodiques, tel, par exemple, que le multiplex qui est décrit dans la demande de brevet européen 83460001.7 intitulée "Système de synchronisation de multiplex numériques de paquets" et déposée par les présents demandeurs le 3 octobre 1983.

Dans le multiplex décrit dans la demande de brevet européen précitée, les paquets sont des blocs de données de longueur fixe de N octets, avec, à titre d'exemple, N = 16. Le premier octet du paquet est l'étiquette qui permet d'identifier le paquet sur le multiplex. Les quinze octets suivants transportent l'information utile proprement dite. Le support du multiplex est lui-même divisé en intervalles de temps de longueur fixe égale à celle d'un paquet. Un intervalle de temps peut être vide, quand il ne contient pas de paquet, ou occupé quand il en contient un. Dans le premier cas, l'octet de créneau correspondant à l'étiquette a une configuration simple, par exemple 00000000 ou 00001111, alors que, dans le cas d'un intervalle de temps occupé, cette valeur est prise dans l'ensemble des 255 combinaisons restantes.

Dans un système de commutation temporelle de plusieurs multiplex de paquets mentionnés ci-dessus, les multiplex entrants, provenant de divers points d'origine, ne sont, à priori, pas synchronisés et les étiquettes ou en-têtes des paquets qu'il transportent sont appliqués au commutateur à des temps octet qui peuvent être différents. Pour pouvoir traiter cycliquement et périodiquement ces étiquettes, il est nécessaire de les aligner, c'est-à-dire de les présenter aux circuits de traitement ultérieur à des instants déterminés par une horloge propre au commutateur.

Un objet de l'invention consiste à prévoir un circuit d'alignement dans lequel les données d'un multiplex sont écrites au rythme de l'horloge du multiplex entrant, puis lues au rythme d'une nouvelle horloge plésiochrone de la première.

Toutefois, le circuit d'alignement, suivant l'invention, n'est pas limité à cette application. En effet, il peut être utilisé chaque fois que l'on souhaite aligner une information constituée de blocs sur une référence locale. Dans ce cas, le fonctionnement est évident quand les horloges d'écriture et de lecture sont synchrones ou plésiochrones. Un fonctionnement asynchrone est également possible, dans lequel, lorsque le rythme d'écriture est supérieur au rythme de lecture, la file est d'abord testée pour savoir qu'elle n'est pas vide avant de valider une lecture pour la durée d'un créneau. Au contraire, quand le rythme d'écriture est plus lent que le rythme de lecture, il faut que le niveau de remplissage de la file ait atteint une certaine hauteur avant de valider la lecture d'un nouveau créneau, ceci afin d'être sûr de ne pas rencontrer un manque d'information au cours du créneau. Le circuit d'alignement, suivant l'invention, permet donc de changer le débit de façon particulièrement simple.

Suivant une caractéristique de l'invention, il est prévu un circuit d'alignement sur une référence externe de blocs d'informations numériques accompagnés d'un signal de cadrage indicatif de début de bloc, le circuit d'alignement comportant une mémoire organisée en file ou mémoire FiFo à $\underline{n}$ entrées parallèles, dont un groupe de $\underline{p}$ entrées est prévu pour recevoir, en début de bloc, ledit signal de cadrage, et dont les (n-p) autres entrées sont prévues pour recevoir séquentiellement l'ensemble du bloc d'informations numériques divisés en mots de (n-p) bits chacun, le circuit d'alignement comportant encore des premiers moyens logiques pour transmettre à la mémoire FiFo un signal d'horloge de lecture, lesdits premiers moyens logiques étant contrôlés par un circuit délivrant un signal d'autorisation de lecture en réponse à la délivrance du signal de rérérence externe alors que la mémoire FiFo n'est pas vide, et des seconds moyens logiques de contrôle du cadrage du bloc d'informations numériques sortant sur le signal de référence externe, lesdits seconds moyens logiques comportant des moyens pour agir sur la commande d'écriture dans la mémoire Fifo de façon à interrompre ladite écriture lorsque les trois conditions suivantes sont remplies simultanément:

- les $\underline{p}$ sorties de la file correspodant aux $\underline{p}$ entrée$\underline{s}$ délivrent un signal différent du signal de cadrage,
- un signal indicatif de l'état de remplissage de la mémoire FiFo indique que celle-ci n'est pas vide, et
- un signal externe correspondant au signal de référence externe est présent.

Suivant une autre caractéristique, les moyens pour agir sur la commande d'écriture sont sensibles au signal indicatif de remplissage de la mémoire FiFo et au signal présent sur les $\underline{p}$ entrées pour autoriser à nouveau l'écriture dans la mémoire FiFo lorsque le signal d'état de remplissage indique que la file est vide et que le signal présent sur les p entrées est le signal de cadrage.

Suivant une autre caractéristique, le circuit d'alignement comprend une mémoire organisée en file ou mémoire FiFo, un circuit de détection de synchronisation, un convertisseur série-parallèle, un circuit logique de commande d'écriture et de lecture et une horloge de lecture, le multiplex entrant étant appliqué au circuit de détection de synchronisation et au convertisseur serie-parallèle, et que le circuit de détection de synchronisation a une sortie de signal de synchronisation de paquet, une sortie d'horloge de multiplet et une sortie de signal de présence de paquet, la mémoire FiFo étant une mémoire de mots de (n + 1) bits, n entrées de données de la mémoire FiFo étant reliées aux sorties du convertisseur série-parallèle et sa dernière entrée de données étant reliée à la sortie de signal de synchronisation de paquet, l'horloge de lecture délivrant un signal périodique de lecture de début de paquet et un signal de lecture, le circuit logique de commande d'écriture et de lecture comportant des moyens de comparaison de la simultanéité du signal de lecture de début de paquet et de la présence d'un signal de synchronisation de paquet à la (n + 1)ᵉ sortie de la mémoire FiFo, des moyens d'inhibition d'écriture reliés à la sortie des moyens de comparaison, des moyens pour activer l'entrée d'écriture de la mémoire FiFo quand la mémoire a été vidée et qu'un signal de synchronisation de paquet est présent à la (n + 1)ᵉ entrée de la mémoire FiFo.

Suivant une autre caractèristique, les moyens de comparaison sont constitués par une porté NON-ET dont une entrée est réliée à l'horloge de lecture pour recevoir ledit signal périodique et l'autre à la sortie d'un inverseur dont l'entrée est reliée à la (n + 1) sortie de la mémoire FiFo.

Suivant une autre caractéristique,les moyens d'inhibition d'écriture sont constitués par une première bascule D dont l'entrée D est reliée à la sortie d'une première porte ET dont une entrée est reliée à la sortie des moyens de comparaison et l'autre entrée à la sortie 9 de la première bascule D, dont l'entrée d'horloge reçoit le signal de lecture, dont l'entrée de mise à "1" est reliée à la sortie d'une seconde porte ET dont une entrée est reliée à la sortie de détection de mémoire vide et l'autre entrée est reliée à la sortie de signal de synchronisation de paquet et dont la sortie Q est reliée à une entrée d'une troisième porte ET dont l'autre entrée est reliée à la sortie d'horloge de multiplet et dont la sortie est reliée à l'entrée d'écriture de la mémoire.

Suivant une autre caractéristique, le circuit de détection de synchronisation a une sortie de signal de présence de paquet qui est reliée à une entrée d'une quatrième porte ET montée entre la sortie Q de la première bascule D et la troisième porte ET.

Suivant une autre caractéristique, les moyens logiques d'écriture et de lecture comprennent encore des moyens d'inhibition de lecture constitués par une seconde bascule D dont l'entrée d'horloge reçoit ledit signal périodique, l'entrée D est reliée à la sortie d'un inverseur dont l'entrée est reliée à la sortie de détection de file vide de la mémoire et dont la sortie Q est reliée à une entrée d'un cinquième porte ET dont l'autre entrée reçoit le signal de lecture et la sortie est reliée à l'entrée de lecture de la mémoire.

Suivant une autre caractéristique, la porte NON-ET a trois entrées dont la troisième est reliée à la sortie de l'inverseur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 est le schéma d'un circuit d'alignement de multiplex de paquets suivant l'invention, et

Les Figs 2a à 2f sont des formes d'onde illustrant le fonctionnement du circuit de la Fig. 2.

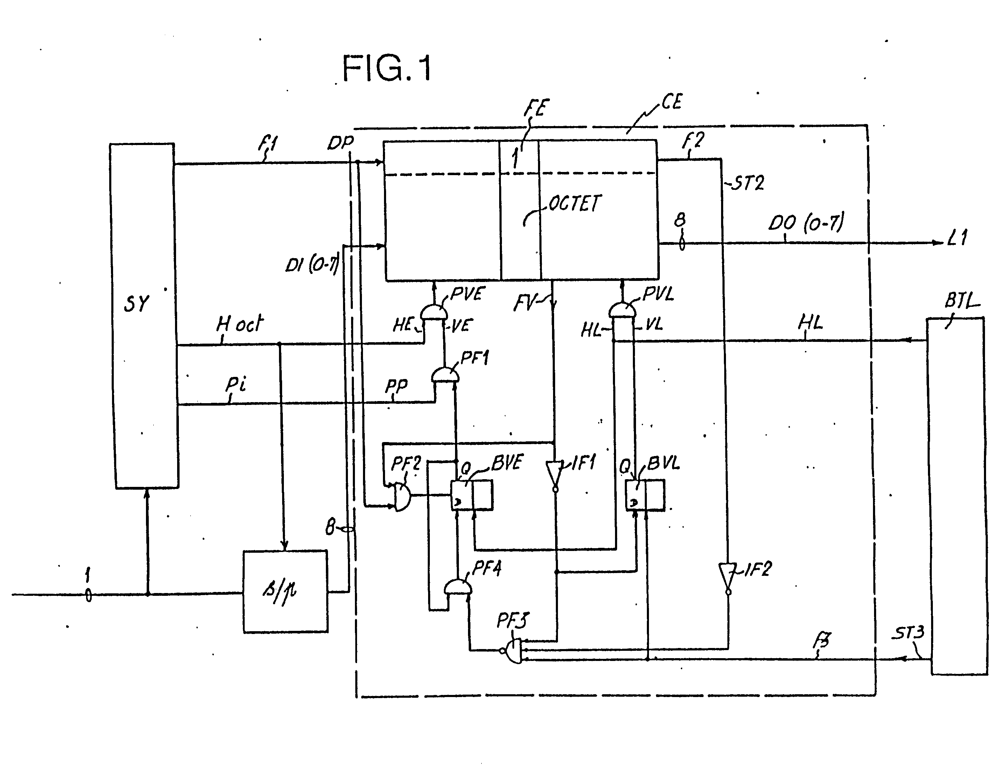

Dans le circuit d'alignement de multiplex de paquets de la Fig. 1, la jonction d'entrée E est reliée à l'entrée d'un convertisseur série-parallèle s/p qui délivre des octets parallèles et dont la sortie est reliée, par une liaison à huit fils DI0 à DI7, à l'entrée d'une file d'attente FE de type premier entré - premier sorti (FiFo en terminologie anglo-saxonne). En dérivation sur l'entrée de chaque convertisseur s/p, est monté un circuit de synchronisation SY qui analyse le train entrant et qui délivre, premièrement, sur un fil Hoct, la synchronisation octet HE, deuxièmement, sur un fil f1, un signal DF de niveau "1" chaque fois que l'octet délivré à la file d'attente est un octet de début de paquet et, troisièmement, sur un fil Pi, un signal PP de niveau "1" chaque fois que le paquet en cours n'est pas vide.

Le fil f1 est relié à une entrée de données de la file FE. La mémoire file FE est prévue pour contenir une suite de mots de neuf bits chacun. En pratique, la mémoire file FE doit avoir une taille supérieure à la capacité d'un paquet, c'est à dire 16 mots de 9 bits dans l'exemple decrit.

Comme le montre la Fig. 1, les entrées de données de la file FE sont reliées aux fils de sortie DI0 à DI7 du convertisseur s/p et au fil f1 de sortie du circuit de synchronisation SY. Son entrée d'horloge d'écriture est reliée à la sortie d'une porte ET PVE qui a sa première entrée reliée au fil Hoct.

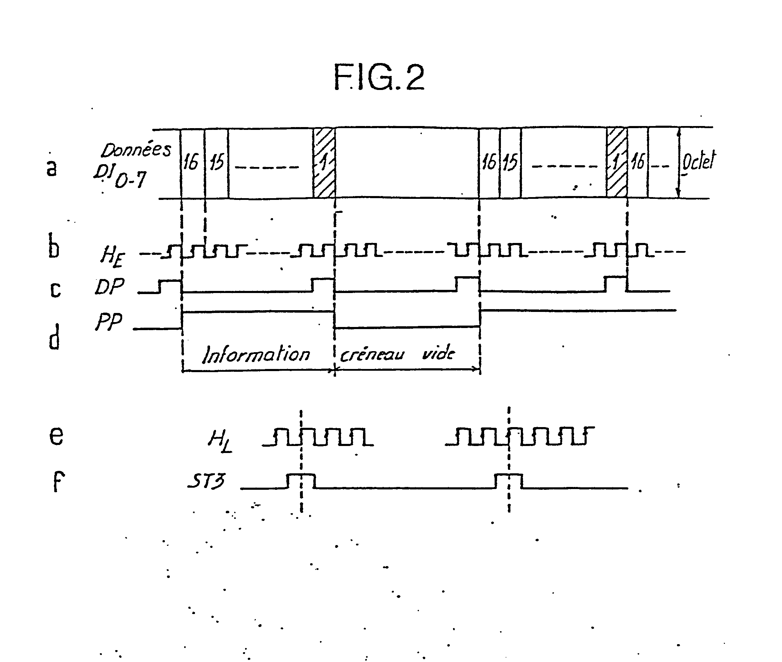

On a représenté aux Figs. 2a à 2d les différents signaux présents sur les fils DI0 à DI7, Hoct, f1 et Pi, respectivement.

Par ailleurs, les sorties de données de la file FE sont reliées à huits fils DO0 à DO7, transmettant les données utiles, et à un fil f2 transmettant un signal ST2 de début de paquet et qui est l'équivalent en sortie de file de DP. L'entrée d'horloge de lecture est reliée la sortie d'une porte ET PVL qui a sa première entrée reliée à une sortie HL d'une base de temps locale BTL, cette horloge étant plésiochrone de l'horloge HE. La seconde entrée de la porte ET PVE constitue une entrée de validation d'écriture VE, tandis que la seconde entrée de la porte ET PVL constitue une entrée de validation de lecture VL. La file FE comporte encore une sortie d'indication de file vide FV, qui est à "1" uniquement quand la file est vide.

L'entrée de validation d'écriture VE est reliée à la sortie d'une porte ET PF1 dont la première entrée est reliée au fil pi et la seconde entrée à la sortie Q d'une bascule BVE du type D. L'entrée de mise à "1" de la bascule BVE est reliée à la sortie d'une porte ET PF2 dont la première entrée est reliée au fil f1 et la seconde à la sortie FV qui est à "1" quand la file FE est vide. Son entrée D est reliée à la sortie d'une porte NON-ET à trois entrées PF3, par l'intermédiaire d'une porte ET PF4 dont l'autre entrée est reliée à la sortie Q de la bascule BVE. Ainsi, la bascule BVE ne peut être mise à "1" que par le signal de sortie de la porte PF2. La porte PF3 l'entrée est reliée à la sortie FV, une seconde entrée reliée à la sortie d'un inverseur IF2 dont l'entrée est reliée au fil f2, et une troisième entrée reliée à une seconde sortie de la base de temps BTL, par un fil f3. L'entrée d'horloge de la bascule BVE est reliée à la sortie d'horloge HL de BTL.

Les signaux émis par la sortie HL de la base de temps BTL et sa seconde sortie, sur le fil f3, sont respectivement montrés aux Figs. 2e et 2f. Il y apparaît que le signal ST3, sur le fil f3, est un signal local de synchronisation de trame, c'est-à-dire émis toutes les seize impulsions HL. En pratique, l'impulsion ST3 a une largeur égale à la période de HL, mais est avancée d'une demi-période avant une lecture effective commandée par HL. Cette garde d'un demi-temps d'octet permet de tolérer une dérive négative durant la lecture du paquet.

L'entrée de validation de lecture VL est reliée à la sortie Q d'une bascule BVL dont l'entrée D est reliée à la sortie de l'inverseur IF1 et l'entrée d'horloge au fil f3.

En fonctionnement normal, la file n'étant pas vide, la bascule BVE est à l'état "1" et les signaux f2 et f3 sont synchrones. La porte PF3 a sa sortie à "1" et la sortie Q de BVE est à "1". La sortie de la porte PF1 étant à "1", on valide l'écriture des paquets dans la file au rythme de l'horloge d'écriture. La file FE n'étant pas vide, l'entrée D de la bascule BVL est à "1". Donc, l'entrée d'horloge f3 de BVL valide la lecture de la file pour la durée de la trame suivante. En pratique, le signal sur le fil f1 progresse dans la file FE parallèlement au premier octet de données avec lequel il a été chargé.

Si, au moment du signal sur f3, le signal sur f2 est absent, la file n'étant pas vide, la sortie de la porte PF3 passe à l'état "0", qui est transmis par la bascule SVE et les portes ET PF1 et PVE à l'entrée de validation d'écriture. Il en résulte que l'écriture est inhibée.

La lecture de la file se poursuit tant que la file n'est pas complètement vide, c'est à dire que la sortie de l'inverseur IF1 est a "1". Quand la file est vidée, la lecture est interrompue au prochain signal sur le fil f3.

La file étant vide, la bascule BVE, qui était bloquée à l'état "0", ne peut être remise à "1" que quand le fil f1 passe à l'état "1" au début d'un nouveau paquet. Dès son changement d'état, l'écriture peut reprendre à la condition que le nouveau paquet ne soit pas vide, ce que l'on va supposer. Dans la mémoire file FE, le premier octet écrit du paquet est pratiquement immédiantement disponible à la sortie de la file avec un bit "1" présenté au fil f2. Par ailleurs, la file n'est plus vide. Donc, dès le signal ST3 sur f3, la lecture est déclenchée par BVL et PVL, et, d'autre part, la porte PF3 confirme le fonctionnement normal.

Quand un paquet vide est désecté par le circuit de détection de synchronisation, le signal PP est à "0", ce qui inhibe l'écriture.

En pratique, le circuit de détection de synchronisation SY peut être constitué par le circuit qui est montré à la Fig. 2 du brevet européen mentionné ci-dessus, complété par un diviseur pa huit pour fournir le signal HE. En effet, dans ce circuit le compteur CT2 fournit le signal DP et la sortie du comparateur COMP peut servir à créer le signal PP. A noter encore que la sortie Hoct de SY est encore reliée au convertisseur s/p pour assurer le découpage correct du train binaire du multiplex en octet.

Dans une variante, le circuit d'alignement peut comporter des moyens logiques pour annuler le contenu de la mémoire FE dès que la sortie de la porte NON-ET PF3 passe à l'état "0". Dans ce cas, la liaison L1 ne transporte pas d'octet inutilisable.

On peut vérifier que le circuit de la Fig. 1 fonctionne également correctement quand le rythme de l'horloge d'écriture HE est plus grand qur celui de l'horloge de lecture HL, à la condition qu'il y ait assez de créneaux blancs à l'entrée de la mémoire FE pour que celle-çi ne déborde pas.

On peut vérifier que le circuit de la Fig. 1 peut aussi fonctionner quand le rythme de l'horloge d'écriture HE est plus petit que celui de l'horloge de lecture HL, à la condition d'y apporter une modification très simple. En effet, dans ce cas il faut être sûr que, quand la lecture d'un bloc est commencée, elle ne va pas être interrompue par un manque de données. Autrement dit, il faut, avant de déclencher la lecture d'un bloc, que la mémoire FiFo FE contienne un nombre minimal d'octets. Cette condition peut être facilement matérialisée en prévoyant que l'entrée de données dans la bascule BVL est reliée non pas à la sortie de l'inverseur IF1, mais à une sortie de la mémoire FE indiquant un remplissage predéterminé de celle-çi.

A la Fig. 1, l'ensemble des circuits FE, PVE, PVL, PF1 à PF4, BVE, BVL, IF1 et IF2, qui sont représentés à l'intérieur du bloc CE, peut être réalisé sous la forme d'un circuit intégré directement commercialisable. Une variante de ce circuit intégré pourrait comporter une ou des sorties supplémentaires de la mémoire FE permettant d'indiquer divers degrés prédéterminés de remplissage de celle-ci.

**Revendications**

1) Circuit d'alignement sur une référence externe (ST3) de blocs d'informations numériques accompagnés d'un signal de cadrage indicatif de début de bloc, caractérisé en ce qu'il comporte une mémoire organisée en file ou mémoire FiFo à n entrées parallèles, dont un groupe de p entrées est prévu pour recevoir, en début de bloc, ledit signal de cadrage, et dont les (n-p) autres entrées sont prévues pour recevoir séquentiellement l'ensemble du bloc d'informations numériques divisé en mots de (n-p) bits chacun, le circuit d'alignement comportant encore des premiers moyens logiques (PVL) pour transmettre à la mémoire FiFo un signal d'horloge de lecture, lesdits premiers moyens logiques étant contrôlés par un circuit (BVL) délivrant un signal d'autorisation de lecture en réponse à la délivrance du signal de référence externe (ST3) alors que la mémoire FiFo n'est pas vide, et des seconds moyens logiques de contrôle du cadrage du bloc d'informations numériques sortant sur le signal de référencé externe, lesdits seconds moyens logiques coportant des moyens (IF1, IF2, PF3, PF4, BVE, PF2, PF1, PVE) pour agir sur la commande d'écriture dans la mémoire FiFo de façon à interrompre ladite écriture lorsque les trois conditions suivantes sont remplies simultanément:
- les p sorties de la file correspondant aux p entrées délivrent un signal différent du signal de cadrage,
- un signal indicatif de l'état de remplissage de la mémoire FiFo indique que celle-ci n'est pas vide, et
- un signal externe correspondant au signal de référence externe (ST3) est présent.

2) Circuit d'alignement suivant la revendication 1, caractérisé en ce que les moyens pour agir sur la commande d'écriture sont sensibles au signal indicatif de remplissage de la mémoire FiFo et au signal présent sur les p entrées pour autoriser à nouveau l'écriture dans la mémoire FiFo lorsque le signal d'état de remplissage indique que la file est vide et que le signal présent sur les p entrées est le signal de cadrage.

3) Circuit d'alignement suivant la revendication 1 ou 2, caractérisé en ce que les premiers moyens logiques sont constitués par une première porte ET (PVL) recevant, d'une part, le signal d'horloge de lecture et, d'autre part, le signal d'autorisation, lequel est délivré par une bascule (BVL) dont l'entrée de données reçoit le signal indicatif de l'état de remplissage de la mémoire FiFo et dont l'entrée d'horloge reçoit le signal de référence externe (ST3).

4) Circuit d'alignement suivant l'une des revendications 1 à 3, caractérisé en ce que p est égal à 1, le signal de cadrage étant constitué par un signal en forme de créneau.

5) Circuit d'alignement suivant l'une des revendications 1 à 4, caractérisé en ce que (n-p) est égal à huit, la mémoire FiFo étant dimensionnée pour mémoriser au mois un bloc de 128 bits,délivrés octet par octet.

6) Circuit d'alignement suivant la revendication 4, caractérisé en ce que les seconds moyens logiques comportent une porte NON-ET (PF3) dont une première entrée reçoit le signal de référence externe (ST3), une seconde entrée reçoit un signal indicatif de mémoire FiFo non vide et la troisième entrée reçoit un signal indiquant que les p sorties de la mémoire FiFo délivrent un signal qui ne correspond pas au signal de cadrage, le signal de sortie de la porte NON-ET (PF3) commandant les moyens d'agir sur la commande d'écriture pour inhiber ladite commande.

7) Circuit d'alignement suivant la revendication 6, caractérisé en ce que les moyens pour agir sur la commande d'écriture sont constitués par une bascule (BVE) dont l'entrée de données est reliée à la sortie d'une seconde porte ET (PF4) dont une entrée est reliée à la sortie de la porte NON-ET (PF3) et dont l'autre entrée est reliée à la sortie de données Q de la seconde bascule (BVE), dont l'entrée d'horloge reçoit le signal d'horloge de lecture, et dont l'entrée de remise à "1" est reliée à la sortie d'une troisième porte ET (PF2) dont un des signaux d'entrée est indicatif de la présence ou l'absence du signal de cadrage sur les p entrées de la mémoire FiFo et dont l'autre des signaux d'entrée est indicatif de mémoire FiFo vide.

8) Circuit d'alignement dans lequel les données d'un multiplex sont écrites au rythme de l'horloge du multiplex entrant, puis lues au rythme d'une nouvelle horloge plésiochrone de la première, comprenant une mémoire organisée en file ou mémoire FiFo, un circuit de détection de synchronisation, un convertisseur série-parallèle, un circuit logique de commande d'écriture et de lecture et une horloge de lecture, le multiplex entrant étant appliqué au circuit de détection de synchronisation et au convertisseur série-parallèle, caractérisé en ce que le circuit de détection de synchronisation a une sortie de signal de synchronisation de paquet, une sortie d'horloge de multiplet et une sortie de signal de présence de paquet, la mémoire FiFo étant une mémoire de mots de (n+1) bits, n entrées de données de la mémoire FiFo étant reliées aux sorties du convertisseur série-parallèle et sa dernière entrée de données étant reliée à la sortie de signal de synchronisation de paquet, l'horloge de lecture délivrant un signal périodique de lecture de début de paquet et un signal de lecture, le circuit logique de commande d'écriture et de lecture comportant des moyens de comparaison de la simultanéité du signal de lecture de début de paquet et de la présence d'un signal de synchronisation de paquet à la

(n+1)ᵉ sortie de la mémoire FiFo, des moyens d'inhibition d'écriture reliés à la sortie des moyens de comparaison, des moyens pour activer l'entrée d'écriture de la mémoire FiFo quand la mémoire a été vidée et qu'un signal de synchronisation de paquet est présent à la (n+1)ᵉ entrée de la mémoire FiFo.

9) Circuit d'alignement suivant la revendication 8, caractérisé en ce que les moyens de comparaison sont constitués par une porte NON-ET dont une entrée est reliée à l'horloge de lecture pour recevoir ledit signal périodique et l'autre à la sortie d'un inverseur dont l'entrée est reliée à la (n+1)ᵉ sortie de la mémoire FiFo.

10) Circuit d'alignement suivant la revendication 8 ou 9, caractérisé en ce que les moyens d'inhibition d'écriture sont constitués par une première bascule D dont l'entrée D est reliée à la sortie d'une première porte ET dont une entrée est reliée à la sortie des moyens de comparaison et l'autre entrée à la sortie Q de la première bascule D, dont l'entrée d'horloge reçoit le signal de lecture, l'entrée de mise à "1" est reliée la sortie d'une seconde porte ET dont une entrée est reliée à la sortie de détection de mémoire vide et l'autre entrée est reliée à la sortie de signal de synchronisation de paquet et la sortie Q est reliée à une entrée d'une troisième porte ET dont l'autre entrée est reliée à la sortie d'horloge de multiplet et dont la sortie est reliée à l'entrée d'écriture de la mémoire.

11) Circuit d'alignement suivant l'une des revendications 8 à 10, caractérisé en ce que le circuit de détection de synchronisation a une sortie de signal de présence de paquet qui est reliée à une entrée d'une quatrième porte ET montée entre la sortie Q de la première bascule D et la troisième porte ET.

12) Circuit d'alignement suivant l'une des revendications 8 à 11, caractérisé en ce que les moyens logiques d'écriture et de lecture comprennent encore des moyens d'inhibition de lecture constitués par une seconde bascule D dont l'entrée d'horloge reçoit ledit signal périodique, l'entrée D est reliée à la sortie d'un inverseur dont l'entrée est reliée à la sortie de détection de file vide de la mémoire et dont la sortie Q est reliée à une entrée d'une cinquième porte ET dont l'autre entrée reçoit le signal de lecture et la sortie est reliée à l'entrée de lecture de la mémoire.

13) Circuit d'alignement suivant l'une des revendications 8 à 12, caractérisé en ce que la porte NON-ET a trois entrées dont la troisième est reliée à la sortie de l'inverseur.

**Patentansprüche**

1. Schaltung zur Anpassung von digitalen Datenblöcken, die von einem den Anfang eines Blocks anzeigenden Markierungssignal begleitet sind, an eine externe Referenz (ST3), <u>dadurch gekennzeichnet</u>, daß sie einen in Reihe organisierten Speicher oder einen FiFo-Speicher mit n parallelen Eingängen umfaßt, von denen eine Gruppe von p Eingängen zum Empfang des genannten Markierungssignals vorgesehen ist, während die (n-p) anderen Eingänge dafür vorgesehen sind, der Reihe nach den gesamten, jeweils in (n-p) Bit-Worte unterteilten digitalen Datenblock zu empfangen, daß die Schaltung ferner erste logische Mittel (BVL) zur Übertragung eines Lese-Taktsignals zum FiFo-Speicher umfaßt, wobei die genannten ersten logischen Mittel durch eine Schaltung (BVL) gesteuert werden, die ein Lese-Freigabesignal in Abhängigkeit von dem Auftreten des externen Referenzsignals (ST3) liefert, falls der FiFo-Speicher nicht leer ist, und ferner zweite logische Mittel zur Steuerung der Anpasung der ausgehenden digitalen Datenblocks an das externe Refenzsignal, wobei die genannten zweiten logischen Mittel Mittel (IF1, IF2, PF3, PF4, BVE, PF2, PF1, PFE) umfassen, um auf die Steuerung für den Schreibvorgang in dem FiFo-Speicher derart einzuwirken, daß der Schreibvorgang unterbrochen wird, wenn die folgenden drei Bedingungen gleichzeitig erfüllt sind:

- die p Ausgänge des Speichers, die den p Eingängen entsprechen, liefern ein Signal, das sich vom Markierungssignal unterscheidet,

- ein Signal für den Zustand der Füllung des FiFo-Speichers zeigt an, daß dieser nicht leer ist, und

- es ist ein externes Signal vorhanden, das dem externen Referenzsignal (ST3) entspricht.

2. Anpassungs-Schaltung nach Anspruch 1, <u>dadurch gekennzeichnet</u>, daß die Mittel zum Einwirken auf die Steuerung für den Schreibvorgang auf das den Füllstand des FiFo-Speichers anzeigende Signal und auf das Signal ansprechen, das der Gruppe von p Eingängen zugeführt wird, um erneut im FiFo-Speicher den Schreibvorgang auszulösen, wenn das Füllstand-Signal anzeigt, daß der Speicher leer ist, und wenn das an den p Eingängen vorhandene Signal das Markierungssignal ist.

3. Anpassungs-Schaltung nach Anspruch 1 oder 2, <u>dadurch gekennzeichnet</u>, daß die ersten logischen Mittel durch ein erstes UND-Tor (PVL) gebildet werden, das einerseits das Lese-Taktsignal und andererseits das Auslöse-Signal empfängt, das von einem Flip-Flop (BVL) geliefert wird, dessen Dateneingang das Signal empfängt, das ein Maß für den Füllstand des FiFo-Speichers ist, und dessen Takteingang das externe Referenzsignal (ST3) empfängt.

4. Anpassungs-Schaltung nach einem der Ansprüche 1 bis 3, <u>dadurch gekennzeichnet</u>, daß p gleich 1 ist, wobei das Markierungssignal durch ein Rechtecksignal gebildet wird.

5. Anpassungs-Schaltung nach einem der Ansprüche 1 bis 4, <u>dadurch gekennzeichnet</u>, daß (n-p) gleich 8 ist, wobei der FiFo-Speicher so bemessen ist, daß er wenigstens einen Block von 128 Bits speichert, die Oktett um Oktett geliefert werden.

6. Anpassungs-Schaltung nach Anspruch 4, dadurch gekennzeichnet daß die zweiten logischen Mittel ein NAND-Tor (PF3) enthalten von dem ein erster Eingang das externe Referenzsignal (ST3) empfängt, ein zweiter Eingang ein Signal empfängt, welches anzeigt, daß der FiFo-Speicher nicht leer ist, und der dritte Eingang ein Signal empfängt, welches anzeigt, daß die p Ausgänge des FiFo-Speichers ein Signal liefern, das nicht dem Markierungssignal enspricht, wobei das Ausgangssignal des NAND-Tors (PF3) die Mittel zum Einwirken auf die Steuerung für den Scnreibvorgang so steuert, daß der Schreibvorgang gesperrt wird.

7. Anpassungs-Schaltung nach Anspruch 6, dadurch gekennzeichnet, daß die Mittel zum Einwirken auf die Steuerung für den Schreibvorgang durch einen Flip-Flop (BVE) gebildet werden, dessen Dateneingang mit dem Ausgang eines zweiten UND-Tors (PFV) verbunden ist, dessen einer Eingang mit dem Ausgang des NAND-Tors (PF3) und dessen anderer Eingang mit dem Datenausgang Q des zweiten Flip-Flop (BVE) verbunden ist, dessen Takteingang das Lese-Takt-Signal empfängt, und dessen auf "1" gestellter Eingang mit dem Ausgang eines dritten UND-Tors (PF2) verbunden ist, dessen eines Eingangssignal das Vorhandensein oder das Fehlen des Markierungssignals an den p Eingängen des FiFo-Speichers angibt, und dessen anderes Eingangssignal angibt, daß der FiFo-Speicher leer ist.

8. Anpassungs-Schaltung, bei der die Daten eines Multiplex im Rhythmus des eingehenden Multiplex-Taktes geschrieben werden, dann im Rhythmus eines anderen Taktes gelesen werden, der plesiochron mit dem ersten Takt ist, umfassend einen in Reihe organisierten Speicher oder einen FiFo-Speicher, eine Synchronisations-Detektorschaltung, einen Serien-Parallel-Umsetzer, eine logische Schaltung zur Steuerung des Schreib- und Lese-Vorgangs und einen Lese-Taktgeber, wobei der eingehende Multiplex der Synchronisations-Detektorschaltung und dem Serien-Parallel-Umsetzer zugeführt wird, dadurch gekennzeichnet, daß die Synchronisations-Detektorschaltung einen Paket-Synchronisations-Signal-Ausgang einen Byte-Takt-Ausgang und einen Paket-Vorhandensein-Signal-Ausgang hat, daß der FiFo-Speicher in der Lage ist, (n + 1) Bit-Worte zu speichern, daß n Dateneingänge des FiFo-Speichers mit den Ausgängen des Serien-Parallel-Umsetzers und sein letzter Dateneingang mit dem Paket-Synchronisations-Signal-Ausgang verbunden ist, daß der Lese-Taktgeber ein periodisches Paket-Anfangs-Lese-Signal und ein Lese-Signal liefert, daß die logische Schaltung zur Steuerung des Schreib- und Lese-Vorgangs Vergleichsmittel zum Vergleich der Gleichzeitigkeit des Paket-Anfang-Lese-Signals und des Vorhandenseins des Paket-Synchronisations-Signals vom (n + 1)ten Ausgang des FiFo-Speichers enthält, daß Mittel zur Sperrung des Schreibvorgangs mit dem Ausgang der Vergleichsmittel verbunden sind, und daß Mittel zur Aktivierung des Schreib-Eingangs des FiFo-Speichers vorgesehen sind, wenn der Speicher leer ist und ein Paket-Synchronisations-Signal am (n + 1)ten Eingang des FiFo-Speichers vorhanden ist.

9. Anpassungs-Schaltung nacn Anspruch 8, dadurch gekennzeichnet, daß die Vergleichsmittel aus einem NAND-Tor bestehen, dessen einer Eingang mit dem Lese-Taktgeber zum Empfang des genannten periodischen Signals, und dessen anderer Eingang mit dem Ausgang eines Umsetzers verbunden ist, dessen Eingang mit dem (n + 1)ten Ausgang des FiFo-Speichers verbunden ist.

10. Anpassungs-Schaltung nach Anspruch 8 oder 9, dadurch gekennzeichnet, daß die Mittel zur Sperrung des Schreibvorgangs aus einem ersten Flip-Flop D bestehen, dessen Eingang D mit dem Ausgang eines ersten UND-Tors verbunden ist, dessen einer Eingang mit dem Ausgang der Vergleichsmittel, und dessen anderer Eingang mit dem Ausgang Q des ersten Flip-Flop D verbunden ist, dessen Takteingang das Lese-Signal empfängt, wobei der auf "1" gesetzte Eingang mit dem Ausgang eines zweiten UND-Tors verbunden ist, dessen einer Eingang mit dem Ausgang zur Feststellung eines leeren Speichers und dessen anderer Eingang mit dem Paket-Synchronisations-Signal-Ausgang verbunden ist, und dessen Eingang Q mit einem Eingang eines dritten UND-Tors verbunden ist, dessen anderer Eingang mit dem Byte-Takt-Ausgang verbunden ist, und dessen Ausgang mit dem Schreibeingang des FiFo-Speichers verbunden ist.

11. Anpassungs-Schaltung nach einem der Ansprüche 8 bis 10, dadurch gekennzeichnet, daß die Synchronisations-Detektor-Schaltung einen Paket-Vorhandensein-Signal-Ausgang hat, der mit einem Eingang eines vierten UND-Tors verbunden ist, das zwischen dem Ausgang Q des ersten Flip-Flop D und dem dritten UND-Tor angeordnet ist.

12. Anpassungs-Schaltung nach einem der Ansprüche 8 bis 11, dadurch gekennzeichnet, daß die logischen Schreib- und Lese-Mittel ferner Lese-Sperrmittel enthalten, die aus einem zweiten Flip-Flop D bestehen, dessen Takteingang das genannte periodische Signal empfängt, daß der Eingang D mit dem Ausgang eines Umsetzers verbunden ist, dessen Eingang mit dem Ausgang zur Feststellung des leeren Speichers verbunden ist, und dessen Ausgang Q mit einem Eingang eines fünften UND-Tors verbunden ist, dessen anderer Eingang das Lese-Signal empfängt, und daß der Ausgang mit dem Lese-Eingang des Speichers verbunden ist.

13. Anpassungs-Schaltung nach einem der Ansprüche 8 bis 12, dadurch gekennzeichnet, daß das NAND-Tor drei Eingänge nat, von denen der dritte mit dem Ausgang des Umsetzers verbunden ist.

## Claims

1) An alignment circuit for matching digital date blocks, accompanied with a block start mark signal, to an external reference (ST3), characterized in that it is comprised of a FiFo memory having $\underline{n}$ parallel inputs among which a set of $\underline{p}$ memory inputs is provided for receiving the said block start mark signal while the other $(n-p)$ memory inputs are provided for receiving the entire data block serially divided in parallel $(n-p)$-bit words, first logical means for applying a read-out clock signal to the FiFo memory, said first logical means being controlled by a circuit (BVL) delivering a read enabling signal in response to the occurence of the external reference signal (ST3) when the FiFo memory is not empty, and second logical means for controlling the matching of the outgoing digital data block to the external reference signal, said second logical means being comprised of control means (IF1, IF2, PF3, PF4, BVE, PF2, PF1, PVE) for so controlling the FiFo memory write control operation as to interrupt said write operation when the three following conditions are simultaneously fulfilled:
- the $\underline{p}$ FiFo memory outputs corresponding to the set of $\underline{p}$ inputs deliver a signal different of the block start mark signal,
- a signal responding to the FiFo memory output-ready signal indicates that said FiFo memory is not empty, and
- an external signal corresponding to the external reference signal (ST3) is being present.

2) An alignment circuit according to claim 1, characterized in that the control means for controlling the write control operation are responsive to the FiFo memory output-ready signal and the signal applied to the set of $\underline{p}$ inputs for again enabling write into the FiFo memory when the FiFo memory output-ready signal indicates the FiFo memory empty and when the signal applied to the set of $\underline{p}$ inputs is actually the block start mark signal.

3) An alignment circuit according to either claim 1 or 2, characterized in that the first logical means are comprised of a first AND gate (PVL) receiving, on the one hand, the read-out clock signal and, on the other hand, the read enable signal that is delivered from a flip-flop (BVL) whose data input receives the FiFo memory output-ready signal and clock input receives the external reference signal (ST3).

4) An alignment circuit according to anyone of claims 1-3, characterized in that $\underline{p}$ is equal to 1, the block start mark signal being shaped as a strobe signal.

5) An alignment circuit according to anyone of claims 1-4, chsracterized in that $(n-p)$ is equal to eight, the FiFo memory being so sized as to store at least a 128-bit block transmitted octet by octet.

6) An alignment circuit according to claim 4, characterized in that the second logical means are comprised of a NAND gate (PF3) whose the first input receives the external reference signal (ST3), the second input receives a signal indicating that the FiFo memory is not empty, and the third input receives a signal indicating that the $\underline{p}$ FiFo memory outputs are delivering a signal different of the block start mark signal, the output signal from said NAND gate (PF3) controlling the said control means for inhibiting the FiFo memory write operation.

7) An alignment circuit according to claim 6, characterized in that the said control means controlling write operation are comprised of a flip-flop (BVE) whose data input is connected from the output of a second AND gate (PF4) whose one input is connected from the output of the NAND gate (PF3) and the other input is connected from the data output Q of the second flip-flop (BVE), and whose clock input receives the read-out clock signal and preset input is connected from the output of a third AND gate (PF2) whose one input signal indicates the occurence or not of the block start mark signal on the $\underline{p}$ FiFo memory inputs and the other input signal indicates that the FiFo memory is empty.

8) An alignment circuit wherein data from a multiplex are written at the rate of the ingoing multiplex clock, then read out at the rate of another clock that, is plesiochronous with the first one, comprising a FiFo memory, a synchronisation detection circuit, a series-to-parallel converter, a logical write/read control circuit and a read-out clock, the ingoing multiplex being applied to the synchronisation detection circuit snd the series-to-parallel converter, characterized in that the synchronisation detection circuit has a packet synchronisation output, a byte clock output and a present packet signal output, the FiFo memory being able to store $(n+1)$ bit words, $\underline{n}$ data inputs of the FiFo memory being connected from seriesto-parallel converter outputs and a lest data input being connected from the packet synchronisation output, the read-out clock providing a periodic packet start read signal and a read-out signal, the logical write/read control circuit having comparison means for comparing the simultaneity of the packet start read signal and the occurence of the packet synchronisation signal from the $(n+1)^{th}$ output of the FiFo memory, write inhibiting means connected from the comparison means output, and means for enabling the FiFo memory write input when said FiFo memory is being empty and a packet synchronisation signal occurs from the $(n+1)^{th}$ output of the FiFo memory.

9) An alignment circuit according to claim 8, characterized in that the comparison means are comprised of a NAND gate whose one input is connected from the read-out clock for receiving the said periodic signal and the other input is connected from the output of an inverter whose input is connected from the $(n+1)^{th}$ output of the FiFo memory.

10) An alignement circuit according to either claim 8 or 9, characterized in that the write inhibition means are comprised of a first type-D

8

**0 113 307**

flip-flop whose D input is connected from the output of a first AND gate whose one input is connected from comparison means output and the other input is connected from Q output of the first type-D flip-flop, whose clock input receives the read-out clock signal, preset input is connected from the output of a second AND gate whose one input is connected from the empty memory detection output and the other input is connected from the packet synchronisation output, and whose Q output is connected to one input of a third AND gate having another input being connected from the byte clock output and an output being connected to the FiFo memory write input.

11) An alignment circuit according to anyone of claims 8-10, characterized in that the synchronisation detection circuit has a present packet output that is connected to one input of a fourth AND gate connected from Q output of the first type-D flip-flop and the third AND gate.

12) An alignment circuit according to anyone of claims 8-11, characterized in that the logical read/write means are further comprised of read inhibition means comprising a second type-D flip-flop whose clock input receives the said periodic signal, D input is connected from the output of an inverter whose input is connected from the empty memory detection output, and whose Q output is connected to one input of a fifth AND gate whose the other input receives the read-out signal and the output is connected to the memory read-out input.

13) An alignment according to anyone of claims 8-12, characterized in that the NAND gate has three inputs, the third one input being connected from the inverter output.

# FIG.1

0 113 307

FIG.2